Europäisches Patentamt

European Patent Office

Office européen des brevets

(19)

(11) EP 0 820 108 A1

## (12) DEMANDE DE BREVET EUROPEEN

(43) Date de publication:
21.01.1998 Bulletin 1998/04

(51) Int Cl.⁶: **H01M 2/18, H01M 2/16**

(21) Numéro de dépôt: 97401667.7

(22) Date de dépôt: 10.07.1997

(84) Etats contractants désignés:
**AT BE CH DE DK ES FI FR GB GR IE IT LI LU MC NL PT SE**

(30) Priorité: 18.07.1996 FR 9609026

(71) Demandeur: **SAFT**
**F-93230 Romainville (FR)**

(72) Inventeurs:
• **Senyarich, Stéphane**
**16600 Mornac (FR)**

• **Leblanc, Patrick**
**91300 Massy (FR)**

(74) Mandataire: **Laroche, Danièle et al**
**c/o ALCATEL ALSTHOM,**
**Département de Propriété Industrielle,**
**30, avenue Kléber**
**75116 Paris (FR)**

(54) **Séparateur pour accumulateur à électrodes enroulées et à électrolyte alcalin**

(57) La présente invention a pour objet un accumulateur spiralé à électrolyte alcalin comprenant au moins une électrode positive et une électrode négative placées de part et d'autre d'un séparateur non-tissé constitué de fibres exclusivement en polypropylène qui sont liées entre elles par des zones de fusion régulièrement disposées, caractérisé par le fait que ledit séparateur (40) est constitué d'au moins deux couches superposées (41,42), l'orientation desdites fibres étant différente dans chacune desdites couches.

FIG.4

EP 0 820 108 A1

**Description**

La présente invention concerne un séparateur pour accumulateur spiralé à électrolyte alcalin, notamment du type Nickel-Cadmium (Ni-Cd) ou Nickel-Métal hydrurable (Ni-MH). Elle s'étend en outre au procédé de fabrication de ce séparateur.

Les accumulateurs Ni-Cd sont depuis très longtemps utilisés comme source d'énergie autonome. Ils sont connus pour posséder une bonne rétention de charge, c'est à dire que lorsqu'ils sont stockés à l'état chargé, leur capacité diminue lentement. La charge perdue par un accumulateur Ni-Cd complètement chargé est de l'ordre de 20% en 7 jours à 40°C.

Les appareils portables récents nécessitant des sources d'énergie autonome de plus en plus importantes, un nouveau couple a été récemment développé. L'accumulateur Ni-MH possède une capacité volumique supérieure à celle de l'accumulateur Ni-Cd, ce qui signifie qu'un accumulateur de format donné aura une autonomie supérieure s'il contient un métal hydrurable plutôt qu'une électrode négative au cadmium. Par contre, l'accumulateur Ni-MH possède une forte autodécharge, ce qui représente un problème très pénalisant pour l'utilisateur. La charge perdue par un accumulateur Ni-MH stocké à l'état complètement chargé est environ deux fois plus importante que pour un accumulateur Ni-Cd, soit 40% en 7 jours à 40°C. Ce mauvais résultat est dû au fait que l'électrode MH une fois chargée possède un caractère réducteur supérieur à celui de l'électrode Cd.

L'autodécharge est généralement attribuée pour partie à des navettes azotées. D'une part l'ammoniac et les nitrites présents dans l'accumulateur s'oxydent en nitrates sur l'électrode positive chargée, ce qui a pour conséquence de la décharger. D'autre part les nitrates et les nitrites se réduisent en ammoniac sur l'électrode négative chargée, ce qui a pour conséquence de la décharger elle aussi. Ces réactions peuvent se dérouler plusieurs fois puisque les espèces générées à l'électrode positive vont réagir sur l'électrode négative où elles se transforment en espèces capables de réagir avec l'électrode positive. C'est pourquoi on parle de navettes.

La réduction des nitrates et des nitrites en ammoniac se trouve accélérée sur une électrode MH. Si cette réaction est l'étape limitante de la cinétique de la navette azotée, ceci signifie que dans un laps de temps donné davantage de navettes pourront se produire dans un accumulateur Ni-MH. Cette hypothèse est généralement admise pour expliquer l'autodécharge importante des accumulateurs Ni-MH.

Afin de limiter l'influence des espèce azotées, il a été proposé dans l'art antérieur de remplacer le séparateur en polyamide généralement utilisé par un séparateur en polyoléfine stable chimiquement dans ce même milieu. En effet un séparateur en polyamide représente une source potentielle d'impuretés azotées du fait de sa détérioration dans l'électrolyte très alcalin utilisé dans les accumulateurs Ni-MH.

Mais un séparateur en polyoléfine présente des difficultés d'utilisation à cause de sa forte hydrophobie. Afin de le rendre hydrophile, il peut être oxydé par traitement de fluoration, par décharge corona ou selon d'autres méthodes, ou bien greffé par des monomères hydrophiles. On peut aussi introduire un agent mouillant dans l'électrolyte.

Un séparateur de polyéthylène est stable chimiquement dans l'électrolyte utilisé, n'introduit pas d'espèces azotées supplémentaires au sein de l'accumulateur, mais est sans effet sur les navettes azotées dues aux impuretés apportées par les autres constituants de l'accumulateur. L'utilisation d'un séparateur en polyéthylène ne permet donc pas de réduire sensiblement l'autodécharge des accumulateurs Ni-MH.

Une autre solution consiste à utiliser un séparateur composé d'un mélange de fibres exclusivement constituées de polypropylène, appelées fibres non liantes, et de fibres de polypropylène recouvertes d'une gaine en polyéthylène, appelées fibres liantes. Lors de la fabrication d'un tel séparateur, la fusion du polyéthylène (dont la température de fusion est inférieure à la température de fusion du polypropylène) permet aux fibres gainées de s'accoler aux fibres non gainées.

Un tel séparateur peut être obtenu soit selon un procédé par voie humide, dit "wet-laid", soit selon un procédé par voie sèche, dit "dry-laid". Ce séparateur est capable de fixer une certaine quantité d'ammoniac et donc de limiter la quantité d'impuretés alimentant les navettes azotées.

Néanmoins la quantité d'ammoniac qui peut être fixée par un tel séparateur est inférieure à la quantité d'espèces azotées présentes dans l'accumulateur. Les espèces non fixées entretiennent une autodécharge élevée du fait de la cinétique extrêmement rapide des navettes décrites précédemment.

La meilleure solution pour réduire l'autodécharge des accumulateurs Ni-MH est d'utiliser un séparateur exclusivement constitué de polypropylène qui est capable de fixer davantage d'ammoniac qu'un séparateur constitué d'un mélange de polypropylène et de polyéthylène. Il peut ainsi bloquer sous forme d'ammoniac l'ensemble des impuretés azotées présentes dans l'accumulateur et introduites par les constituants utilisés. Les navettes azotées sont donc complètement supprimées ainsi que l'autodécharge qui leur est associée.

Deux procédés de fabrication de séparateur exclusivement constitué de polypropylène sont connus à ce jour. D'une part il s'agit du procédé par soufflage pulsé de matière fondue, dit "melt-blow", qui consiste à déposer sur une surface plane le polymère en fusion qui expulsé par saccades. Les fibres obtenues sont courtes et disposées de manière aléatoire. En se refroidissant elles adhèrent les unes aux autres. Ce procédé a l'inconvénient de produire un séparateur très fragile mécaniquement, très sensible au déchirement et qu'il est impossible de spiraler pour réaliser un accumulateur cylindrique.

Il s'agit d'autre part du procédé par filage d'une fibre continue, dit "spun-bond", qui diffère du précédent en ce que le polymère fondu est expulsé de manière continue à travers une filière. On obtient des fibres très longues et de fort diamètre. Ce procédé conduit à un séparateur qui offre de bonnes propriétés mécaniques mais possède l'inconvénient d'être peu homogène et donc très vulnérable aux courts-circuits.

La présente invention a pour but de proposer un accumulateur Ni-MH comportant un séparateur qui possède simultanément l'aptitude à réduire l'autodécharge et une bonne résistance mécanique au spiralage.

L'objet de la présente invention est un accumulateur spiralé à électrolyte alcalin, notamment du type Nickel-Cadmium ou Nickel-Métal hydrurable, comprenant au moins une électrode positive et une électrode négative placées de part et d'autre d'un séparateur non-tissé constitué de fibres exclusivement en polypropylène qui sont liées entre elles par des zones de fusion régulièrement disposées, caractérisé par le fait que ledit séparateur est constitué d'au moins deux couches superposées, l'orientation desdites fibres étant différente dans chacune desdites couches.

La surface des zones est de forme géométrique. Les fibres de polypropylène sont liées entre elles par des points de fusion dont la forme géométrique peut être variée: rond, carré, losange, croix, triangle, polygone quelconque, etc... Ces zones sont réparties de manière homogène à intervalles réguliers sur toute la surface du séparateur. La surface des zones est comprise entre $0,01mm^2$ et $1mm^2$. La surface unitaire d'une zone de fusion est choisie de telle sorte que la zone de fusion recouvre plusieurs fibres.

Selon la résistance mécanique recherchée pour le séparateur et la surface unitaire des zones de fusion, la densité surfacique des zones peut être plus ou moins élevée. Le séparateur comprend de 0,1 zone par $mm^2$ à 10 zones par $mm^2$.

Avantageusement lesdites zones ont une surface cumulée comprise entre 3% et 30% de la surface dudit séparateur. Ceci permet d'assurer la solidité mécanique du séparateur, notamment lors du spiralage.

Pour que la liaison des fibres soit suffisamment résistante, les zones de fusion ont une profondeur comprise entre 40% et 90% de l'épaisseur d'une couche du séparateur. Ou bien encore les zones de fusion ont une profondeur comprise entre 40% et 90% de l'épaisseur du séparateur.

Avantageusement lesdites fibres ont un diamètre compris entre 1µm et 16µm et une longueur comprise entre 1mm et 50mm. Leur dimension permet une meilleure maîtrise de leur orientation. Les fibres de polypropylène peuvent être disposées sur une surface plane de manière aléatoire ou selon une direction choisie.

De préférence, ledit séparateur a une épaisseur comprise entre 0,1 et 1mm et une masse surfacique comprise entre $10g/m^2$ et $70g/m^2$. Ces caractéristiques dimensionnelles lui permettent d'assurer efficacement la rétention de l'électrolyte et l'isolation électrique entre des électrodes de polarité différente, sans accroître la résistance interne de l'accumulateur.

Selon un mode de réalisation particulier de l'invention, ledit séparateur est greffé par un monomère choisi parmi l'acide acrylique et l'acide métacrylique. Le greffage du séparateur permet de lui conférer un caractère hydrophile intrinsèque.

Selon une première variante, ledit séparateur est constitué d'au moins deux couches superposées, une première couche dont les fibres sont disposées parallèlement les unes aux autres et une deuxième couche dont les fibres sont disposées de manière aléatoire. Une telle structure renforce la tenue mécanique du séparateur. De manière préférentielle, l'épaisseur de la couche au sein de laquelle les fibres sont alignées représente 20% à 70% de l'épaisseur totale du séparateur, et l'épaisseur de la couche au sein de laquelle les fibres sont orientées de façon aléatoire représente 30% à 90% de l'épaisseur totale du séparateur.

Selon une deuxième variante, ledit séparateur est constitué d'au moins deux couches superposées, une première couche dont les fibres sont disposées parallèlement les unes aux autres et une deuxième couche dont les fibres sont disposées parallèlement les unes aux autres selon une orientation différente de celle des fibres de ladite première couche. Par exemple, une première couche se compose de fibres de polypropylène alignées dans le sens machine et une seconde couche est formée de fibres de polypropylène alignées selon une direction transversale, perpendiculaire au sens machine. De préférence, les axes d'orientation des fibres de polypropylène font entre eux un angle compris entre 45° et 90°.

Selon une troisième variante, ledit séparateur est constitué d'au moins une première couche dont les fibres sont disposées parallèlement les unes aux autres et comporte une deuxième couche réalisée selon un procédé par soufflage pulsé de matière fondue, connu sous le nom de procédé "melt-blow". L'adjonction d'une couche en polypropylène de type "melt-blown" permet d'améliorer encore les caractéristiques de l'accumulateur vis-à-vis de l'autodécharge.

Selon une quatrième variante, ledit séparateur est constitué d'au moins une première couche dont les fibres sont disposées parallèlement les unes aux autres et comporte une deuxième couche réalisées selon un procédé par voie humide comprenant des fibres éclatées de grande surface spécifique, connu sous le nom de "wet-laid pulp fibers".

Le séparateur est constitué d'une première couche de fibres en polypropylène alignées dans le sens machine et d'une deuxième couche contenant des fibres en polypropylène éclatées, dites fibres "pulp", ce qui leur confère une très grande surface développée. Ceci contribue à diminuer l'autodécharge de l'accumulateur.

Il est bien sûr possible de réaliser l'une des couches du séparateur selon l'invention par tout autre procédé connu.

De préférence, ladite couche à fibres parallèles a une masse surfacique comprise entre 10g/m$^2$ et 50g/m$^2$ et ladite deuxième couche a une masse surfacique comprise entre 10g/m$^2$ et 30g/m$^2$.

Le séparateur selon la présente invention est capable de fixer sous forme d'ammoniac une quantité d'espèces azotées supérieure à la quantité d'espèces azotées présentes dans l'accumulateur sous formes d'impuretés.

La présente invention a également pour objet un procédé de fabrication d'un séparateur pour accumulateur spiralé à électrolyte alcalin, notamment du type Nickel-Cadmium ou Nickel-Métal hydrurable, comprenant les étapes suivantes:

- on réalise un mélange mécanique à sec desdites fibres de polypropylène,
- on dispose lesdites fibres sur une surface plane pour former au moins une couche,
- on applique sur la surface de ladite couche un dispositif muni de poinçons de forme géométrique régulièrement disposés, lesdits poinçons étant à une température supérieure à la température de fusion du polypropylène.

Au cours de la deuxième étape, les fibres sont disposées parallèlement les unes aux autres selon une variante, ou bien encore les fibres sont disposées de manière aléatoire selon une autre variante.

Selon les caractéristiques recherchées pour le séparateur, les zones de fusion sont réalisées une fois les deux couches de fibres de polypropylène superposées. Ou bien les deux couches sont chacune indépendamment réalisées, puis elles sont ensuite liées par de nouvelles zones de fusion ou par tout autre moyen.

Selon un premier mode de réalisation de l'invention, au cours de ladite deuxième étape, on forme une première couche en disposant lesdites fibres selon une première orientation, puis on forme une deuxième couche en disposant lesdites fibres selon une orientation différente de ladite première orientation, ladite première couche et ladite deuxième couche étant ensuite solidarisées au cours de la troisième étape par application dudit dispositif sur la surface de l'une desdites couches.

Ce dispositif est commodément constitué d'un rouleau chauffant muni de poinçons dont la forme géométrique et la disposition correspondent aux zones de fusion que l'on souhaite obtenir. La vitesse du calandrage par points de fusion ainsi que la température des rouleaux sont choisies de façon à ce que la profondeur des points de fusion ne représente que 40% à 90 % de l'épaisseur totale du séparateur.

Selon une forme d'exécution de l'invention, on forme une première couche en disposant parallèlement les unes aux autres lesdites fibres, puis on forme une deuxième couche en disposant de manière aléatoire lesdites fibres.

Selon une autre forme d'exécution, on forme une première couche en disposant parallèlement les unes aux autres lesdites fibres, puis on forme une deuxième couche en disposant parallèlement les unes aux autres lesdites fibres selon une orientation différentes de celle des fibres de ladite première couche.

Selon un deuxième mode de réalisation de l'invention, on forme d'une part une première couche en disposant lesdites fibres selon une première orientation puis on applique ledit dispositif, et d'autre part on forme une deuxième couche en disposant lesdites fibres selon une orientation différente de ladite première orientation puis on applique ledit dispositif, les deux couches étant ensuite superposées et liées.

Selon un troisième mode de réalisation de l'invention, on forme d'une part une première couche en disposant lesdites fibres selon une première orientation et on applique ledit dispositif, et d'autre part on réalise une deuxième couche par un procédé différent, les deux couches étant ensuite superposées et liées.

Selon une variante, le procédé selon l'invention comprend en outre une étape de greffage d'un monomère choisi parmi l'acide acrylique et l'acide métacrylique. Le greffage de ces monomères hydrophiles se fait par irradiation sous rayonnement Ultra-Violet, par irradiation d'un faisceau d'électrons ou bien par irradiation de rayons X.

D'autres caractéristiques et avantages de la présente invention apparaîtront au cours des exemples suivants de réalisation, donnés bien entendu à titre illustratif et non limitatif, et dans le dessin annexé sur lequel :

- la figure 1 est une vue schématique d'un accumulateur Ni-MH spiralé selon l'invention,
- la figure 2 représente la surface d'un séparateur selon l'invention montrant la disposition des zones de fusion,
- la figure 3 est une vue partielle agrandie de la surface du séparateur de la figure 2 autour d'une zone de fusion,
- la figure 4 est une vue schématique agrandie en perspective, avec un arrachement partiel, d'un séparateur selon l'invention.

EXEMPLE 1

On construit un accumulateur I Ni-Cd selon l'art antérieur constitué d'une électrode positive dont la matière active est de l'hydroxyde de nickel et d'une électrode négative dont la matière active est de l'hydroxyde de cadmium. Ces deux électrodes sont séparées par un séparateur en polyamide (PA). L'ensemble est spiralé et placé dans un godet de format AA qui est rempli d'un électrolyte composé d'un mélange d'hydroxyde de potassium KOH, d'hydroxyde de sodium NaOH et d'hydroxyde de lithium LiOH. La quantité d'espèces azotées identifiées et participant aux navettes azotées précédemment décrites correspond à $1,5.10^{-4}$ moles d'azote.

L'accumulateur I est chargé puis déchargé à deux reprises, et la capacité $C_2$ déchargée au deuxième cycle est mesurée. Après la troisième charge, l'accumulateur est ensuite stocké à potentiel libre pendant 7 jours à 40°C. Après retour à la température ambiante, l'accumulateur est complètement déchargé à un régime de $I_c/5$ ($I_c$ est le régime permettant la décharge de la capacité nominale en 1 heure), afin de déterminer la capacité restante $C_3$. On définit la perte de capacité P comme la différence entre la capacité déchargée $C_2$ obtenue lors de la seconde décharge et la capacité déchargée $C_3$ obtenue après le repos de 7 jours à 40°C, divisée par la capacité déchargée $C_2$ obtenue lors de la seconde décharge:

$$P(\%) = \frac{C_2-C_3}{C_2} \times 100$$

Dans le cas du présent accumulateur, la perte de capacité P est de 23%. La capacité du séparateur polyamide à fixer l'ammoniac est nulle.

EXEMPLE 2

On construit un accumulateur II Ni-MH selon l'art antérieur analogue à celui décrit dans l'exemple 1 à l'exception de l'électrode négative dont la matière active est un alliage métallique capable d'absorber l'hydrogène.

La quantité d'espèces azotées identifiées et participant aux navettes azotées précédemment décrites correspond à $1,5.10^{-4}$ moles d'azote.

L'accumulateur est évalué électrochimiquement en stockage dans les conditions données dans l'exemple 1. Dans ce cas, la perte de capacité P est de 46%. La capacité du séparateur polyamide à fixer l'ammoniac est nulle.

Ce résultat montre que l'autodécharge d'un accumulateur Ni-MH est beaucoup plus importante que celle d'un accumulateur Ni-Cd dans les mêmes conditions.

EXEMPLE 3

On construit un accumulateur III Ni-MH selon l'art antérieur analogue à celui décrit dans l'exemple 2, à l'exception du fait que les composants sont sélectionnés de façon à minimiser la quantité d'impuretés azotées introduites dans l'accumulateur.

La quantité d'espèces azotées identifiées et participant aux navettes azotées précédemment décrites correspond à $0,5.10^{-4}$ moles d'azote.

L'autodécharge de cet accumulateur est testée comme décrit dans l'exemple 2. Dans ce cas, la perte de capacité P est de 39%. La capacité du séparateur polyamide à fixer l'ammoniac est nulle.

EXEMPLE 4

On construit un accumulateur IV Ni-MH selon l'art antérieur analogue à celui décrit dans l'exemple 2 à l'exception du séparateur qui est en fibres de polypropylène gainées de polyéthylène (PP + PE) et rendu hydrophile par un traitement d'oxydation.

La quantité d'espèces azotées identifiées et participant aux navettes azotées précédemment décrites correspond à $1,5.10^{-4}$ moles d'azote.

L'autodécharge de cet accumulateur est testée comme décrit dans l'exemple 2. Dans ce cas, la perte de capacité est de 45%. La capacité du séparateur en mélange oxydé de polyoléfines à fixer l'ammoniac est nulle.

EXEMPLE 5

On construit un accumulateur V Ni-MH selon l'art antérieur analogue à celui décrit dans l'exemple 2, à l'exception du séparateur qui est en fibres de polypropylène gainées de polyéthylène (PP + PE) rendu hydrophile par greffage d'acide acrylique (AA).

La quantité d'espèces azotées identifiées et participant aux navettes azotées précédemment décrites correspond à $1,5.10^{-4}$ moles d'azote.

L'autodécharge de cet accumulateur est testée comme décrit dans l'exemple 2. Dans ce cas, la perte de capacité est de 48%. La capacité du séparateur en mélange de polyoléfines greffé à fixer l'ammoniac est égale à $1,0.10^{-4}$ moles

d'azote. On constate par conséquent que ceci est insuffisant pour piéger la totalité des espèces azotées et donc pour bloquer complètement les navettes azotées.

EXEMPLE 6

On construit un accumulateur Ni-MH selon l'art antérieur analogue à celui décrit dans l'exemple 2, à l'exception du séparateur réalisé par le procédé dit "melt-blow" qui est en fibres de polypropylène.

Afin de réaliser un accumulateur de format AA, l'ensemble électrode-séparateur est spiralé pour être placé dans un godet cylindrique. La tenue mécanique du séparateur ne lui permet pas de résister au spiralage.

EXEMPLE 7

On construit un accumulateur VI Ni-MH selon l'invention.

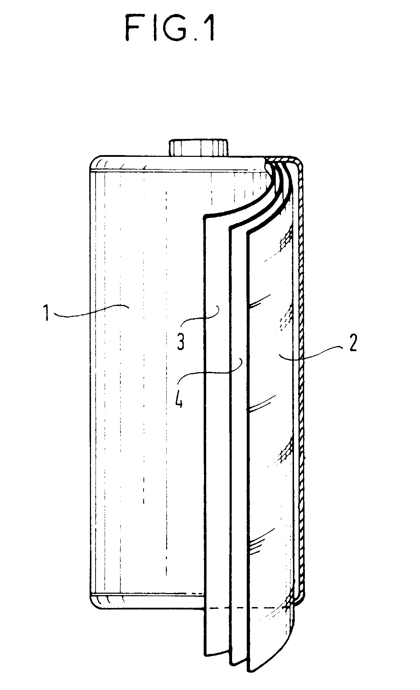

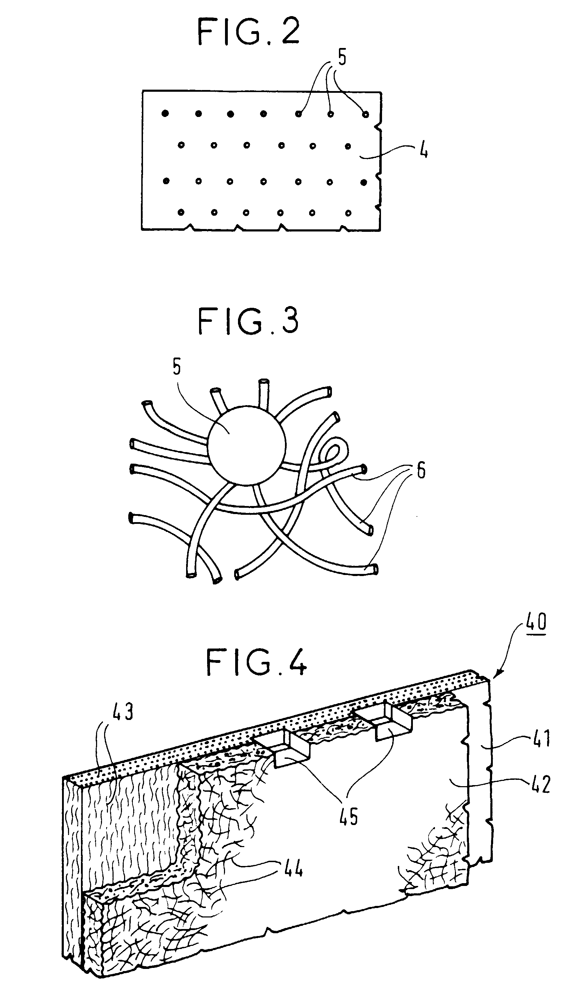

Sur la figure 1, on voit que cet accumulateur 1 est constitué d'une électrode positive 2 dont la matière active est de l'hydroxyde de nickel et d'une électrode négative 3 dont la matière active est un alliage métallique capable d'absorber l'hydrogène. Ces deux électrodes sont séparées par un séparateur 4 en polypropylène (PP) constitué de deux couches, une première couche où les fibres sont alignées et une deuxième couches où les fibres sont disposées aléatoirement. La surface de ce séparateur présente des zones de fusion 5 de forme ronde disposées de manière régulière comme on le voit sur la figure 2. Une vue agrandie (figure 3) montre qu'une zone de fusion 5 recouvre plusieurs fibres 6 de polypropylène disposées de manière aléatoire qui sont ainsi reliées entre elles.

La figure 4 est une vue agrandie du séparateur 40 selon l'invention comprenant deux couches 41 et 42. La première couche 41 se compose de fibres de polypropylène 43 disposées parallèlement les unes aux autres, de préférence dans le sens machine pour des raison de commodité de mise en oeuvre industrielle. Sur cette première couche 41 est superposée une deuxième couche 42 dont les fibres de polypropylène 43 sont disposées de manière aléatoire. Les deux couches 41 et 42 une fois superposées sont solidarisées par passage sous un rouleau chauffant muni de poinçons. Le séparateur 40 terminé porte des points de fusion 45 de forme carrée, impliquant les deux couches 41 et 42, dont la profondeur est d'environ 60% de l'épaisseur du séparateur 40.

L'ensemble électrode-séparateur est spiralé et placé dans un godet de format AA qui est rempli d'un électrolyte composé d'un mélange d'hydroxyde de potassium KOH, d'hydroxyde de sodium NaOH et d'hydroxyde de lithium LiOH, auquel on a ajouté un agent mouillant possédant des propriétés tensioactives. La résistance mécanique du séparateur à l'opération de spiralage est tout à fait satisfaisante.

La quantité d'espèces azotées identifiées et participant aux navettes azotées précédemment décrites correspond à $1,5.10^{-4}$ moles d'azote.

L'autodécharge de cet accumulateur est testée comme décrit dans l'exemple 2. Dans le cas présent, la perte de capacité est de 43%. La capacité du séparateur à fixer l'ammoniac est égale à $1,1.10^{-4}$ moles d'azote. On constate notamment qu'un meilleur résultat est obtenu avec un séparateur en polypropylène selon l'invention, qui n'a pas subi de greffage, par rapport au séparateur greffé en mélange de polyoléfines de l'art antérieur décrit dans l'exemple 5.

EXEMPLE 8

On construit un accumulateur VII Ni-MH selon l'invention analogue à celui décrit dans l'exemple 6 à l'exception du fait que le séparateur est en polypropylène (PP) rendu hydrophile par greffage d'acide acrylique (AA) et que l'électrolyte ne contient pas d'agent mouillant.

La quantité d'espèces azotées identifiées et participant aux navettes azotées précédemment décrites correspond à $1,5.10^{-4}$ moles d'azote.

L'autodécharge de cet accumulateur est testée comme décrit dans l'exemple 2. Dans le cas présent, la perte de capacité est de 21%. La capacité du séparateur en polypropylène greffé à fixer l'ammoniac est égale à $2,5.10^{-4}$ moles d'azote. On constate par conséquent que la totalité des espèces azotées sont piégées sous forme d'ammoniac par le séparateur, ce qui bloque complètement les navettes azotées responsables de l'autodécharge élevée des accumulateurs Ni-MH.

EXEMPLE 8

On construit un accumulateur VIII Ni-Cd selon l'invention analogue à l'accumulateur Ni-MH décrit dans l'exemple 7 à l'exception du fait que la matière actiev de l'électrode négative est à base -de cadmium. Les électrodes encadre un séparateur en polypropylène constitué de deux couches, une première couche où les fibres sont alignées et une deuxième couches où les fibres sont disposées aléatoirement, rendu hydrophile par greffage d'acide acrylique.

La quantité d'espèces azotées identifiées et participant aux navettes azotées précédemment décrites correspond à 1,5.10$^{-4}$ moles d'azote.

L'autodécharge de cet accumulateur est testée comme décrit dans l'exemple 2. Dans le cas présent, la perte de capacité est de 20%. La capacité du séparateur à fixer l'ammoniac est égale à 2,5.10$^{-4}$ moles d'azote. On constate qu'on obtient un meilleur résultat en autodécharge avec le séparateur selon l'invention greffé qu'avec un séparateur en polyamide de l'art antérieur décrit dans l'exemple 1.

Le tableau ci-dessous regroupe les résultats obtenus pour les accumulateurs I à VII.

**TABLEAU 1**

| Accumulateur | Ni-Cd I | Ni-MH II | Ni-MH III | Ni-MH IV | Ni-MH V | Ni-MH VI | Ni-MH VII | Ni-Cd VIII |
|---|---|---|---|---|---|---|---|---|
| Séparateur | PA | PA | PA | PP+PE oxydé | PP+PE greffé AA | PP bicouche | PP bicouche greffé AA | PP bicouche greffé AA |
| Azote dans l'accumulateur (moles) | $1,5.10^{-4}$ | $1,5.10^{-4}$ | $0,5.10^{-4}$ | $1,5.10^{-4}$ | $1,5.10^{-4}$ | $1,5.10^{-4}$ | $1,5.10^{-4}$ | $1,5.10^{-4}$ |
| Capacité à piéger $NH_3$ (moles) | 0 | 0 | 0 | 0 | $1,0.10^{-4}$ | $1,1.10^{-4}$ | $2,5.10^{-4}$ | $2,5.10^{-4}$ |
| Perte de capacité (7 j à 40°C) | 23 % | 46 % | 39 % | 45 % | 48 % | 43 % | 21 % | 20 % |

**Revendications**

1. Accumulateur spiralé à électrolyte alcalin comprenant au moins une électrode positive et une électrode négative placées de part et d'autre d'un séparateur non-tissé constitué de fibres exclusivement en polypropylène qui sont liées entre elles par des zones de fusion régulièrement disposées, caractérisé par le fait que ledit séparateur est constitué d'au moins deux couches superposées, l'orientation desdites fibres étant différente dans chacune desdites couches.

2. Accumulateur selon la revendication 1, dans lequel lesdites zones sont de forme géométrique et leur surface est comprise entre 0,01mm$^2$ et 1mm$^2$.

3. Accumulateur selon l'une des revendications 1 et 2, dans lequel ledit séparateur comprend de 0,1 zone par mm$^2$ à 10 zones par mm$^2$.

4. Accumulateur selon l'une des revendications précédentes, dans lequel lesdites zones ont une surface cumulée comprise entre 3% et 30% de la surface dudit séparateur.

5. Accumulateur selon l'une des revendications précédentes, dans lequel lesdites zones ont une profondeur comprise entre 40% et 90% de l'épaisseur d'une couche.

6. Accumulateur selon l'une des revendications précédentes, dans lequel lesdites zones ont une profondeur comprise entre 40% et 90% de l'épaisseur totale dudit séparateur.

7. Accumulateur selon l'une des revendications précédentes, dans lequel ledit séparateur a une épaisseur totale comprise entre 0,1 et 1mm.

8. Accumulateur selon l'une des revendications précédentes, dans lequel ledit séparateur a une masse surfacique comprise entre 10g/m$^2$ et 70g/m$^2$

9. Accumulateur selon l'une des revendications précédentes, dans lequel lesdites fibres ont un diamètre compris entre 1µm et 16µm et une longueur comprise entre 1mm et 50mm.

10. Accumulateur selon l'une des revendications précédentes, dans lequel ledit séparateur est greffé par un monomère choisi parmi l'acide acrylique et l'acide métacrylique.

11. Accumulateur selon l'une des revendication précédentes, dans lequel ledit séparateur est constitué d'une première couche dont les fibres sont disposées parallèlement les unes aux autres et d'une deuxième couche dont les fibres sont disposées de manière aléatoire.

12. Accumulateur selon la revendication 11, dans lequel l'épaisseur de ladite première couche représente 20% à 70% de l'épaisseur totale dudit séparateur.

13. Accumulateur selon l'une des revendications 11 et 12, dans lequel l'épaisseur de ladite deuxième couche représente 30% à 90% de l'épaisseur totale dudit séparateur.

14. Accumulateur selon l'une des revendications 1 à 10, dans lequel ledit séparateur est constitué d'une première couche dont les fibres sont disposées parallèlement les unes aux autres et d'une deuxième couche dont les fibres sont disposées parallèlement les unes aux autres selon une orientation différente de celle des fibres de ladite première couche.

15. Accumulateur selon la revendication 12, dans lequel l'axe d'orientation desdites fibres de ladite première couche fait un angle compris entre 45°C et 90°C avec l'axe d'orientation desdites fibres de ladite deuxième couche.

16. Accumulateur selon l'une des revendications 1 à 10, dans lequel ledit séparateur est constitué d'au moins un première couche dont les fibres sont disposées parallèlement les unes aux autres et d'une deuxième couche réalisée selon un procédé par soufflage pulsé de matière fondue.

17. Accumulateur selon l'une des revendications 1 à 10, dans lequel ledit séparateur est constitué d'au moins une première couche dont les fibres sont disposées parallèlement les unes aux autres et d'une deuxième couche réalisée selon un procédé par voie humide et comprenant des fibres éclatées de grandes surface.

18. Accumulateur selon l'une des revendications 16 et 17, dans lequel ladite première couche a une masse surfacique comprise entre 10g/m$^2$ et 50g/m$^2$ et ladite deuxième couche a une masse surfacique comprise entre 10g/m$^2$ et 30g/m$^2$.

19. Procédé de fabrication d'un séparateur pour accumulateur selon l'une des revendications précédentes, comprenant les étapes suivantes:

- on réalise un mélange mécanique à sec desdites fibres de polypropylène au cours d'une première étape,
- on dispose lesdites fibres sur une surface plane pour former au moins une couche au cours d'une deuxième étape,
- on applique sur la surface de ladite couche un dispositif muni de poinçons de forme géométrique régulièrement disposés, lesdits poinçons étant à une température supérieure à la température de fusion du polypropylène au cours d'une troisième étape.

20. Procédé selon la revendication 19, dans lequel, au cours de ladite deuxième étape, lesdites fibres sont disposées parallèlement les unes aux autres.

21. Procédé selon la revendication 19, dans lequel, au cours de ladite deuxième étape, lesdites fibres sont disposées de manière aléatoire.

22. Procédé selon la revendication 19, dans lequel, au cours de ladite deuxième étape, on forme une première couche en disposant lesdites fibres selon une première orientation, puis on forme une deuxième couche en disposant lesdites fibres selon une orientation différente de ladite première orientation, ladite première couche et ladite deuxième couche étant ensuite solidarisées au cours de la troisième étape par application dudit dispositif sur la surface de l'une desdites couches.

23. Procédé selon la revendication 22, dans lequel on forme une première couche en disposant parallèlement les unes aux autres lesdites fibres, puis on forme une deuxième couche en disposant de manière aléatoire lesdites fibres.

24. Procédé selon la revendication 22, dans lequel on forme une première couche en disposant parallèlement les unes aux autres lesdites fibres, puis on forme une deuxième couche en disposant parallèlement les unes aux autres lesdites fibres selon une orientation différentes de celle des fibres de ladite première couche.

25. Procédé selon la revendication 19, dans lequel d'une part on forme une première couche en disposant lesdites fibres selon une première orientation puis on applique ledit dispositif, et d'autre part on forme une deuxième couche en disposant lesdites fibres selon une orientation différente de ladite première orientation puis on applique ledit dispositif, les deux couches étant ensuite superposées et liées.

26. Procédé selon la revendication 19, dans lequel d'une part on forme une première couche en disposant lesdites fibres selon une première orientation et on applique ledit dispositif, et d'autre part on réalise une deuxième couche par un procédé différent, les deux couches étant ensuite superposées et liées.

27. Procédé selon l'une des revendications 19 à 26, comprenant en outre une étape de greffage d'un monomère choisi parmi l'acide acrylique et l'acide métacrylique.

# FIG.1

# FIG.2

# FIG.3

# FIG.4

**Office européen**
**des brevets**

# RAPPORT DE RECHERCHE EUROPEENNE

Numéro de la demande

EP 97 40 1667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 006, no. 182 (E-131), 18 septembre 1982 & JP 57 096459 A (MATSUSHITA ELECTRIC IND CO LTD), 15 juin 1982, * abrégé * | 1,11-13 | H01M2/18 H01M2/16 |
| Y | --- | 1-8,10 | |
| X | EP 0 680 107 A (TOKYO SHIBAURA ELECTRIC CO ;TOSHIBA BATTERY (JP)) 2 novembre 1995 * revendications 1,10,11,15; figures 2-4 * * page 4, ligne 42 - ligne 44 * * page 5, ligne 44 - page 6, ligne 6 * * page 6, ligne 49 - ligne 52 * * page 7, ligne 14 - ligne 25 * * page 7, ligne 43 - ligne 56 * * page 9, ligne 52 - page 10, ligne 12 * * page 10, ligne 55 - ligne 58 * * page 11, ligne 15 - ligne 24 * | 19,21,27 | |
| Y | --- | 1-8,10 | |
| Y | US 4 220 693 A (DI PALMA RALPH B ET AL) 2 septembre 1980 * exemple 1 * | 2-4 | |
| Y | --- FR 2 281 651 A (FREUDENBERG CARL) 5 mars 1976 * page 1, ligne 29 - ligne 31 * * page 2, ligne 25 - ligne 37; revendications 1,2,4; exemple 1 * * page 3, ligne 12 - ligne 32 * | 3,4 | |
| A | * revendication 9 * --- | 11 | |

DOMAINES TECHNIQUES RECHERCHES (Int.Cl.6)

H01M

-/--

Le présent rapport a été établi pour toutes les revendications

| Lieu de la recherche | Date d'achèvement de la recherche | Examinateur |
|---|---|---|
| LA HAYE | 8 octobre 1997 | D'hondt, J |

EPO FORM 1503 03.82 (P04C02)

**Office européen des brevets**

## RAPPORT DE RECHERCHE EUROPEENNE

Numéro de la demande

EP 97 40 1667

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (Int.Cl.6) |
| A | DATABASE WPI<br>Section Ch, Week 9602<br>Derwent Publications Ltd., London, GB;<br>Class A17, AN 96-016231<br>XP002042902<br>& JP 07 290 627 A (TONEN KAGAKU KK) , 7 novembre 1995<br>* abrégé *<br>& PATENT ABSTRACTS OF JAPAN<br>vol. 96, no. 3, 29 mars 1996<br>JP<br>* abrégé *<br>--- | 16 | |
| A | FR 2 123 344 A (GAF CORPORATION) 8 septembre 1972<br>* revendications 1,3,11,15,16,24,27; exemple 2 *<br>* page 5, ligne 11 - ligne 34 *<br>--- | 11,20 | |
| A | US 3 186 876 A (JEAN CLAUDE PIACHON) 1 juin 1965<br>* colonne 2, ligne 23 - ligne 49 *<br>* colonne 3, ligne 2 - ligne 7; revendication 1; figure 4 *<br>--- | 11 | DOMAINES TECHNIQUES RECHERCHES (Int.Cl.6) |
| A | GB 2 285 638 A (PALL CORP) 19 juillet 1995<br>* page 15, ligne 26 - page 16, ligne 31; revendications 1,2,8; exemple 1 *<br>--- | 1,11 | |
| A | PATENT ABSTRACTS OF JAPAN<br>vol. 018, no. 382 (E-1580), 19 juillet 1994<br>& JP 06 111847 A (SHIN KOBE ELECTRIC MACH CO LTD), 22 avril 1994,<br>* abrégé *<br>--- | 1,11 | |

-/--

Le présent rapport a été établi pour toutes les revendications

| Lieu de la recherche | Date d'achèvement de la recherche | Examinateur |
|---|---|---|
| LA HAYE | 8 octobre 1997 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**Office européen des brevets**

**RAPPORT DE RECHERCHE EUROPEENNE**

Numéro de la demande

EP 97 40 1667

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | PATENT ABSTRACTS OF JAPAN<br>vol. 010, no. 005 (E-372), 10 janvier 1986<br>& JP 60 170159 A (MATSUSHITA DENKI SANGYO KK), 3 septembre 1985,<br>* abrégé * | 11 | |
| A | PATENT ABSTRACTS OF JAPAN<br>vol. 009, no. 118 (E-316), 23 mai 1985<br>& JP 60 009056 A (DAINIC KK), 18 janvier 1985,<br>* abrégé * | 1 | |
| A | GB 1 080 221 A (IMPERIAL CHEMICAL INDUSTRIES) 23 août 1967<br>* revendication 7 * | 26 | |
| A | US 4 668 566 A (BRAUN RALPH V) 26 mai 1987<br>* colonne 3, ligne 55 - ligne 62; revendications 1,16,18,19 *<br>* colonne 6, ligne 54 - ligne 63; figures 1,2 * | 22,25 | DOMAINES TECHNIQUES RECHERCHES (Int.Cl.6) |

Le présent rapport a été établi pour toutes les revendications

| Lieu de la recherche | Date d'achèvement de la recherche | Examinateur |
|---|---|---|
| LA HAYE | 8 octobre 1997 | D'hondt, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)